# FASCICULE DE BREVET EUROPEEN

(11) **EP 4 531 240 B1**
(45) Date de publication et mention de la délivrance du brevet: **22.04.2026**
(21) Numéro de dépôt: 24202652.4
(22) Date de dépôt: 25.09.2024
(51) Int. Cl.: H02J 15/00, F03G 3/00, F03G 7/08

(54) **CONDENSATEUR À ÉNERGIE POTENTIELLE GRAVITATIONNELLE**
KONDENSATOR MIT GRAVITATIONSPOTENZIALENERGIE
GRAVITATIONAL POTENTIAL ENERGY CAPACITOR

(30) Priorité: 28.09.2023 FR 2310343; 28.09.2023 CH 10642023
(43) Date de publication de la demande: 02.04.2025
(73) Titulaire: Darbellay, Jérôme, 1936 Verbier (CH)
(72) Inventeur: Darbellay, Jérôme, 1936 Verbier (CH)
(74) Mandataire: Bugnion Genève

(56) Documents cités:
- EP-A1- 4 206 463
- WO-A1-2022/140764
- GB-A- 2 594 526
- US-A1- 2020 109 703

## Description

### DOMAINE TECHNIQUE ET ART ANTERIEUR

La présente invention se rapporte à un système offrant des fonctionnalités similaires à un condensateur électrique, reposant sur le stockage d'énergie sous forme d'énergie potentielle gravitationnelle.

Les techniques de production d'énergie propre ne répondent pas toujours aux exigences des systèmes qui requièrent cette énergie. La puissance fournie est souvent très variable. La puissance fournie dans un intervalle de temps donné est parfois insuffisante, alors que l'énergie ayant été produite précédemment est suffisante. De plus, les solutions comme les éoliennes fournissent un courant alternatif de fréquence variable. Ces défauts des techniques de production d'énergie renouvelable sont corrigés par des solutions relativement complexes ou induisant des pertes : le passage du courant par un redresseur et un onduleur, les banques de supercondensateurs, les batteries électrochimiques.

Dans un objectif de décarbonation de la production d'énergie électrique, l'utilisation de panneaux solaires et d'éoliennes permet de participer à cet objectif. Cependant la production d'énergie électrique n'est pas continue et atteint des pics de production, notamment en plein jour avec un fort ensoleillement pour les panneaux solaires, et des creux de production, notamment la nuit. Lorsque la quantité d'énergie électrique produite dépasse la demande, il est nécessaire de stocker la quantité d'énergie excédentaire pour pouvoir en disposer à d'autres moments, notamment en périodes de productions basses.

Le mode de stockage le plus répandu utilise des batteries électrochimiques qui convertissent l'électricité en énergie chimique, qui peut ensuite être de nouveau convertie en électricité à la demande. Les batteries tendent à se décharger avec le temps et leurs performances se dégradent. En outre le temps de charge peut être relativement long.

Une solution de stockage d'énergie électrique sous forme d'énergie potentielle gravitationnelle a été proposée. Celle-ci met en œuvre une grue qui élève des blocs de béton. L'énergie électrique excédentaire est utilisée pour élever les blocs transformant une énergie cinétique en énergie potentielle. Pour récupérer de l'électricité, un ou des blocs sont redescendus et un alternateur génère de l'électricité. Cette solution permet de ne pas recourir à des batteries de stockage. Un exemple est WO2022/140764.

Néanmoins l'empilement de blocs de béton peut poser des problèmes de sécurité. Les transmissions mécaniques génèrent des frottements qui engendrent des pertes et de l'usure. De plus les câbles demandent un entretien important. Lorsque le stockage gravitaire cherche à optimiser la quantité d'énergie stockée, il nécessite d'importantes masses et donc d'importants volumes. Les structures imaginées, comme des tours ont un important impact sur le paysage. Les systèmes par câbles et poulies ont un délai de réaction qui, combiné à des plots de volume fixe et important en font un système relativement peu dynamique.

### EXPOSÉ DE l'INVENTION

C'est par conséquent un but de la présente demande d'offrir un système offrant les fonctionnalités d'un condensateur par stockage d'énergie, notamment d'énergie électrique, sous forme d'énergie potentielle gravitationnelle ne présentant pas les inconvénients mentionnés ci-dessus. Le système peut être désigné condensateur magnétique à énergie gravitationnelle ou condensateur à moteur linéaire et énergie gravitationnelle.

Le but énoncé ci-dessus est atteint par un système comportant un conduit vertical et un ou plusieurs éléments mobiles, dont au moins une partie de leur enveloppe extérieure est en matériau conducteur électrique, destinés à être élevés pour stocker l'énergie et redescendus pour récupérer l'énergie. Le système comporte également des moyens électromagnétiques répartis sur les parois du conduit vertical et/ou sur les éléments mobiles. Le système comporte également une unité de commande qui gère les moyens électromagnétiques pour provoquer l'élévation d'au moins un élément mobile dans le conduit vertical. L'élément mobile est stocké en hauteur. L'énergie est ainsi convertie en énergie potentielle gravitationnelle. Des moyens pour immobiliser les éléments mobiles le long du conduit vertical sont avantageusement prévus.

Lorsque l'on souhaite disposer de l'énergie ainsi stockée, les éléments mobiles sont redescendus dans le conduit vertical, l'accélération de la pesanteur est freinée par le dispositif électromagnétique et ainsi l'énergie potentielle gravitationnelle, est convertie en énergie cinétique qui est convertie par exemple en électricité.

Le système mettant en œuvre peu d'éléments mécaniques et présentant des contacts réduits, le rendement de stockage est sensiblement amélioré. De plus le système est relativement robuste et les besoins de maintenance sont réduits. Il n'y a pas de décharge au cours du temps.

Les éléments mobiles sont confinés dans le conduit vertical, la sécurité de fonctionnement est augmentée.

Le système peut être utilisé :
- comme générateur de secours,
- pour stabiliser un réseau de puissance,
- pour émettre ponctuellement une puissance démultipliée,
- pour absorber ponctuellement un pic de puissance,
- pour convertir un courant alternatif,
- pour stabiliser une fréquence du courant.

Dans un exemple de réalisation, les moyens électromagnétiques comportent des électroaimants disposés sous forme de pistes réparties sur la circonférence du conduit vertical et s'étendant verticalement. De préférence, les pistes sont en saillie de la surface intérieure du conduit vertical, ménageant ainsi des canaux d'échappement d'air entre la circonférence extérieure des éléments mobiles et la surface intérieure du conduit vertical.

En variante les électroaimants sont sous la forme de disques superposés sur la hauteur du conduit vertical.

Le conduit vertical peut être un puits sous-terrain creusé dans le sol ou un conduit aérien ménagé par exemple dans un immeuble.

Les disques peuvent être de simples masses conductrices. Ainsi, la réponse magnétique se fait à la manière du rail de Laplace. En variante, ils peuvent comporter des aimants permanents ou des électroaimants. Dans ce dernier cas, des connexions électriques des électroaimants sur des disques en mouvement sont prévues.

La présente invention a alors pour objet un système de condensateur à en énergie potentielle gravitationnelle comportant un conduit vertical, des éléments mobiles de stockage de l'énergie potentielle gravitationnelle, et un dispositif électromagnétique porté au moins en partie par la face intérieure du conduit vertical, ledit dispositif électromagnétique étant destiné à être alimenté par une source de courant électrique, une unité de contrôle gérant le dispositif électromagnétique en fonction du courant électrique à stocker, les éléments mobiles étant configurés pour pouvoir être élevés dans le conduit vertical et redescendus sous l'action d'un dispositif électromagnétique.

Dans un exemple de réalisation, les éléments mobiles comportent au moins une enveloppe conductrice électrique et le dispositif électromagnétique comporte des électroaimants sur la face intérieure du conduit vertical, lesdits électroaimants étant répartis sur la hauteur du conduit vertical.

Par exemple, le dispositif électromagnétique est destiné à être alimenté par un courant électrique triphasé et le dispositif électromagnétique comporte 3n pistes d'électroaimants verticales, n étant un entier strictement positif, lesdites pistes étant réparties angulairement sur la face intérieure du puits, chaque piste étant entourée par une piste alimentée par une phase différente, et l'unité de contrôle étant configurée pour gérer l'alimentation de chacune des pistes.

Dans un exemple de réalisation, le conduit vertical est de section circulaire, les éléments mobiles sont des disques et les électroaimants ont la forme d'arc de cercle répartis régulièrement angulairement sur la face intérieure du conduit vertical.

Le dispositif électromagnétique peut comporter des électroaimants sur la face intérieure du conduit vertical ou sur les éléments mobiles et des électroaimants ou des aimants permanents sur les éléments mobiles.

De préférence, le système comporte des moyens mécaniques d'immobilisation des éléments mobiles le long du conduit vertical, lesdits moyens mécaniques d'immobilisation étant avantageusement configurés pour être activés automatiquement en cas d'interruption d'une alimentation électrique.

Très avantageusement, le système comporte des moyens pour récupérer l'énergie de décélération des éléments mobiles en fin de déplacement.

Selon une caractéristique additionnelle, le conduit vertical comporte au niveau de l'extrémité supérieure et au niveau de l'extrémité inférieure des zones de stockage des éléments mobiles.

La présente invention a également pour objet une éolienne comportant un mât, des pâles et des moyens de conversion de l'énergie appliquée au pâle en énergie électrique et un système selon l'invention disposé dans le mât.

La présente invention a également pour objet une installation comportant un système selon l'invention, et des panneaux photovoltaïques et/ou des éoliennes formant la source de courant électrique à stocker.

La présente invention a également pour objet une installation comportant un réseau électrique de puissance présentant des élévations de puissance et des chutes de puissance, et un système selon l'invention, l'unité de contrôle étant configurée pour gérer le dispositif électromagnétique pour stocker du courant et libérer du courant afin de stabiliser le réseau électrique.

Le système peut comporter, au moins pendant une phase de fonctionnement, une zone configurée pour absorber les élévations de puissance et une zone configurée pour compenser les chutes de puissance, par exemple chaque zone comportant un conduit vertical et ses éléments mobiles.

### BREVE DESCRIPTION DES DESSINS

La présente demande sera mieux comprise à l'aide de la description qui va suivre et des dessins en annexe sur lesquels :
- La figure 1 est une vue en perspective d'un exemple de système de stockage,
- La figure 2 est une vue en coupe longitudinale et en perspective de la figure 1, les éléments mobiles n'étant pas représentés,
- La figure 3 est une vue de dessus de l'exemple du système de la figure 1,
- La figure 4 est une vue en coupe longitudinale du système de la figure 1 avec les éléments mobiles,
- La figure 5 est une vue en coupe transversale d'un autre exemple de conduit vertical d'un système selon l'invention,
- La figure 6 est une vue en perspective d'un autre exemple de réalisation d'un système selon l'invention,
- La figure 7 est une représentation schématique d'une installation intégrant un système de stockage selon l'invention.

### DESCRIPTION DÉTAILLÉE DE MODES DE RÉALISATION

Dans la description qui va suivre, le terme « conduit vertical » désigne un ouvrage enterré, mais également toute installation présentant une certaine hauteur comme cela sera illustré par les différents exemples décrits. Les conduits proposés sont cylindriques, mais ils pourraient présenter toute autre forme, pars exemple ils pourraient présenter une forme polygonale.

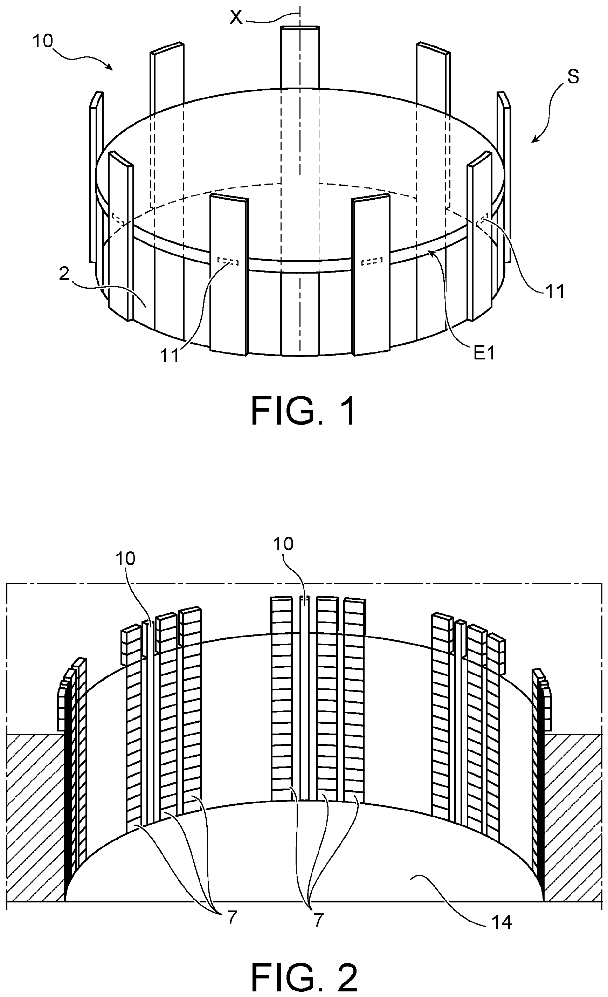

Sur les figures 1 à 4, on peut voir une représentation schématique d'un exemple de système de stockage selon l'invention.

Le système de stockage S comporte un conduit vertical 2 sous-terrain creusé dans le sol de section circulaire et d'axe longitudinal X.

Le conduit vertical 2 comporte un fond 4, une extrémité supérieure 6, ouverte dans l'exemple représenté, et une paroi latérale 8.

Le système comporte également des éléments mobiles E1, E2...En de l'énergie électrique en énergie potentielle gravitationnelle, via l'ascension des éléments dans le conduit vertical.

Le système comporte un dispositif fonctionnant, d'une part en actionneur linéaire configuré pour élever les éléments mobiles le long de l'axe X et ainsi convertir l'énergie électrique en énergie potentielle gravitationnelle, et d'autre part en générateur lors de la redescente des éléments mobiles le long de l'axe X et convertir l'énergie potentielle gravitationnelle en énergie électrique.

Les éléments mobiles forment la partie mobile de l'actionneur et la paroi latérale forme le stator.

Dans l'exemple qui est représenté sur les figures 1 à 4, l'actionneur linéaire comporte une partie mobile conductrice électrique.

Les éléments de stockage sont au moins en partie réalisés en matériau conducteur électrique, par exemple en fer ou alliage de fer.

Dans un exemple de réalisation, les éléments de stockage sont entièrement en matériau conducteur électrique. Dans un autre exemple de réalisation, les éléments mobiles E1...En comportent au moins une enveloppe extérieure en matériau conducteur électrique et un corps intérieur par exemple en béton ou composé de roches ou de gravats liés entre eux, ou de tout élément présentant une masse importante. L'enveloppe extérieure est par exemple un godet. Cet exemple de réalisation présente l'avantage d'avoir un prix de revient plus faible que des éléments entièrement en matériau conducteur.

Le stator comporte des électroaimants 7 répartis sur la circonférence de la surface intérieure du conduit vertical. Dans l'exemple, ils sont en forme d'arc de cercle. Par ailleurs, les électroaimants sont superposés verticalement et forment des pistes verticales s'étendant sur toute la hauteur du conduit vertical.

Le stator est alimenté par un courant alternatif triphasé. Pour cela, le stator comporte 3n pistes, n étant un entier positif, chaque n pistes étant reliée à une phase du courant. Dans l'exemple représenté, 9 pistes sont mises en œuvre. Le nombre de pistes d'électroaimants et les dimensions des électroaimants sont déterminés, notamment, mais non limitativement en fonction des dimensions du conduit vertical, des dimensions des éléments mobiles à déplacer.

De préférence, les pistes sont reparties angulairement de manière régulière sur la circonférence de la face intérieure du conduit vertical, avec une succession de chacune des pistes reliées à une phase. La répartition régulière des électroaimants alimentés par une phase permet de maintenir le disque en équilibre lors de son ascension.

En variante, les électroaimants sont sur les éléments mobiles. Une connexion électrique de chaque élément mobile est à réaliser.

De manière préférée, des rails de guidage 10 sont prévus le long de la face intérieure du conduit vertical pour guider les éléments mobiles. Très avantageusement, chaque disque est équipé d'un système d'immobilisation vertical 11 (figure 1), représentés schématiquement, de sorte à pouvoir maintenir le disque dans le conduit vertical, par exemple en cas d'interruption d'alimentation électrique. Le système d'immobilisation est par exemple similaire à celui utilisé pour les ascenseurs. Il s'agit de préférence d'un système mécanique qui s'active lors d'une coupure de courant, ou d'un arrêt programmé par le contrôleur.

En variante, les rails de guidage et les pistes d'électroaimants sont confondus.

La mise en œuvre d'un dispositif comportant au moins une partie mobile conductrice électrique permet de mettre en œuvre des disques de conception simple et ainsi d'en utiliser un grand nombre.

Dans un autre exemple de réalisation, l'actionneur linéaire comporte un stator comprenant des électroaimants répartis sur toute la hauteur du conduit vertical et la partie mobile comporte des aimants permanents. En variante, la partie mobile comporte des électroaimants et le stator comporte des électroaimants. Dans ce cas, la connexion électrique sur la partie mobile peut être plus complexe.

Dans un autre exemple de réalisation, les éléments mobiles comportent des électroaimants alimentés en courant continu via des balais, et le conduit vertical comporte des aimants permanents. Dans ce cas, il est prévu une maintenance des balais exposés à l'usure.

Dans un autre exemple, les aimants permanents sont placés sur la face intérieure du conduit vertical et des solénoïdes sont portés par le ou les éléments mobiles.

Le système comporte également une unité de commande UC destinée à gérer l'alimentation des électroaimants en phase de stockage et à récupérer l'électricité en phase de décharge.

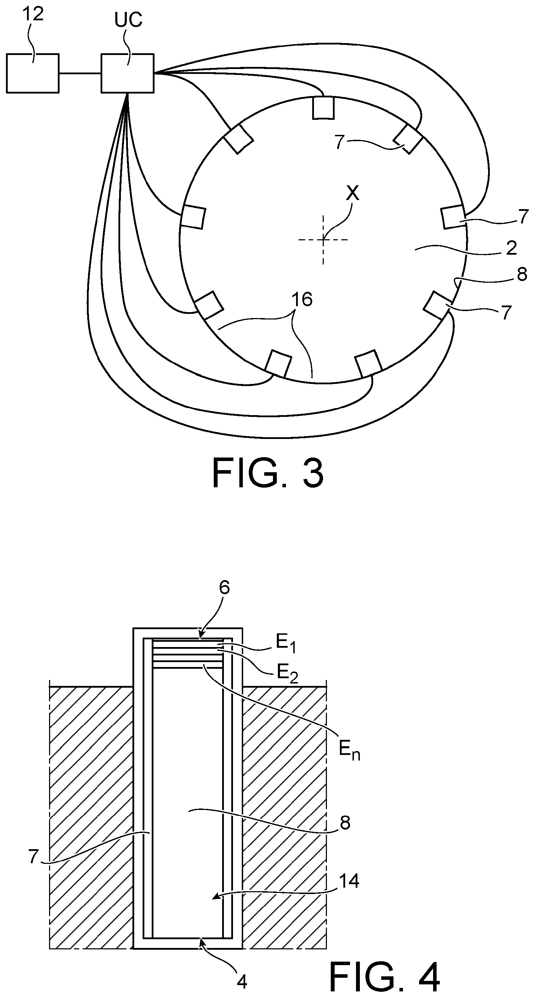

Chaque électroaimant est connecté par une connexion C1 à une source d'alimentation électrique 12 (figure 3). Par exemple, il s'agit de panneaux photovoltaïques ou d'éoliennes, qui fournissent de l'électricité par intermittence, et les électroaimants sont connectés par une connexion à une charge (non représentée) destinée à utiliser l'électricité qui est générée lors de la descente des éléments mobiles. La charge peut être le réseau électrique d'une maison, d'un immeuble d'habitation, d'une usine...

De préférence, l'extrémité supérieure du conduit vertical comporte une zone d'entreposage 10 des éléments mobiles E1, ... En. L'extrémité supérieure est équipée, de préférence, de moyens pour immobiliser les éléments verticalement (non représentés). La zone d'entreposage 10 est située en surface dans l'exemple de la figure 1, mais cela n'est en aucun cas limitatif.

Dans cet exemple, l'extrémité inférieure du conduit vertical comporte de préférence une zone d'entreposage 14 des éléments mobiles.

Le fonctionnement du système selon l'invention va maintenant être décrit.

Considérons le cas où l'on souhaite stocker l'électricité générée par des panneaux photovoltaïques ; ceux-ci sont connectés par une connexion électrique au système selon l'invention

En pleine journée, les panneaux photovoltaïques génèrent de l'électricité qui alimente le système. Le courant continu généré par les panneaux photovoltaïques est converti par un onduleur en courant alternatif triphasé qui alimente les électroaimants. L'unité de commande UC gère l'alimentation alternée des électroaimants de sorte qu'ils génèrent une force verticale vers le haut sur les éléments mobiles de manière similaire à un actionneur linéaire. En gérant l'alimentation des n électroaimants par phase du bas vers la haut l'élément mobile est déplacé le long de l'axe vertical X vers le haut. L'électricité produite par les panneaux photovoltaïques, lors de l'ascension, est convertie en énergie cinétique, puis en énergie potentielle gravitationnelle

Tant que les panneaux photovoltaïques produisent une quantité d'électricité suffisante, l'élément mobile est élevé. En cas de courant trop faible ou d'interruption, l'élément mobile est immobilisé par les moyens d'immobilisation 11 à une hauteur donnée le long des rails. Lorsque suffisamment d'électricité est à nouveau disponible, l'élément mobile reprend son ascension. Lorsqu'il atteint le sommet du conduit vertical, il est immobilisé dans la zone d'entreposage. Des éléments mobiles sont élevés tant que de l'électricité à stocker est disponible.

L'unité de commande UC contrôle l'alimentation des électroaimants, de sorte que l'ascension de chaque élément ait lieu à une vitesse sensiblement constante. De préférence, lorsque l'élément approche de l'extrémité supérieure du puits, l'élément mobile est décéléré pour atteindre l'extrémité supérieure à vitesse nulle.

Lorsque l'on souhaite utiliser l'énergie stockée sous forme d'électricité, les éléments mobiles se trouvant à l'extrémité supérieure, sont redescendus. L'unité de commande gère les électroaimants en générateur. Par exemple, une puissance cible est déterminée en fonction du système que l'on veut alimenter et de la durée d'alimentation. Le nombre de disques permettant d'atteindre cette cible est ensuite déterminé. Les disques sont groupés selon le nombre déterminé et sont descendus simultanément dans le conduit. La vitesse de descente des disques est déterminée par la fréquence alternative du courant triphasé.

Les variations de puissance et les délais induits par les phases d'accélération et de décélération sont avantageusement anticipés, de tels sorte que le courant produit soit le plus stable possible. Durant les phases d'accélération et de décélération, le courant alternatif émis est de fréquence variable. Des moyens sont avantageusement mis en œuvre pour stabiliser la fréquence.

De manière préférée, des moyens de décélération aux extrémités inférieure et supérieure de l'élément mobile sont prévus et des moyens de collecte de l'énergie produite lors de la décélération. Cette décélération, principalement en phase descendante, génère un pic d'énergie. Cette énergie peut être stockée sous forme d'électricité dans des batteries. Ces batteries sont de petites dimensions et stockent l'électricité de manière temporaire. En variante, l'énergie est stockée sous forme mécanique dans un ou des volants d'inertie. Les moyens de décélération sont par exemple de type magnétique facilitant la récupération d'énergie. Des moyens de décélération mécaniques sans récupération d'énergie ne sortent pas du cadre de la présente invention.

Des moyens d'accélération des éléments mobiles aux extrémités inférieure et supérieure sont prévus. L'accélération, principalement en phase ascendante, génère un pic de consommation de courant.

De manière particulièrement avantageuse, l'énergie produite en phase de décélération est utilisée pour alimenter la phase d'accélération. Dans le cas d'un stockage par volant d'inertie, l'énergie peut être utilisée rapidement pour démarrer l'ascension d'un élément mobile.

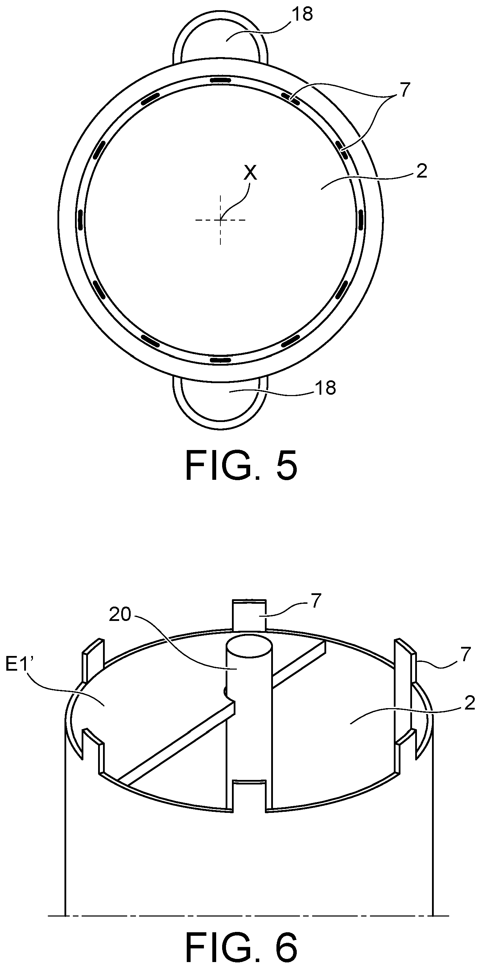

De préférence et comme cela est représenté sur la figure 3, les pistes d'électroaimants sont en saillie de la face intérieure du conduit vertical, de sorte à ménager des canaux 16 pour permettre les déplacements d'air lors de l'ascension et la descente des éléments mobiles et éviter de générer des frottements. En variante ou en complément, des canaux 18 sont réalisés à l'extérieur du conduit vertical comme cela est représenté sur la figure 5.

Dans un autre exemple de réalisation, le conduit vertical est intégré à un immeuble à l'image d'une cage d'ascenseur. Le système selon l'invention peut être couplé à un ascenseur. Par exemple, en dehors de l'utilisation normale de l'ascenseur, des matériaux pourraient être remontés par la cage.

Dans un autre exemple de réalisation, le conduit vertical est adossé à une falaise ou à un barrage. En comparaison d'un puits foré verticalement, la pression exercée par le terrain imbibé d'eau ne s'accumule pas à la base et l'air déplacé peut être évacué facilement.

De préférence, on souhaite réduire la durée de l'accélération des disques, pour cela on réduit leur vitesse. Cela permet également de contenir les pertes par frottement de l'air et d'augmenter la durée de la course d'une extrémité à l'autre du conduit.

A titre d'exemple uniquement, nous allons donner un exemple de dimensionnement d'un système selon l'invention et de ses capacités de stockage.

Le puits a un diamètre de 1,6 m et une profondeur de 80 m. Il est étanchéifié et séché.

Le système comporte 50 disques en fer de 1,6 m de diamètres et 50 mm d'épaisseur. Chaque disque pèse 588,88 kg.

Le conduit vertical comporte 9 pistes verticales, chaque 3 pistes est connectée à une phase.

Un disque se déplace verticalement dans le conduit est soumis à une double inversion de polarité à une fréquence de 50 hertz. Sa vitesse est relativement lente, de telle sorte que les phases d'accélération et décélération sont courtes.

A titre d'exemple, pour des disques se déplaçant à 1m/s avec une accélération de 0,33 m/s⁻², la distance entre deux électroaimants de même orientation est de 2 cm et la hauteur de chaque électroaimant est de 1 cm

Par contre, lorsqu'on cherche à se synchroniser avec la fréquence du réseau, la réduction de vitesse des rotors implique de resserrer les changements de phase sur le stator.

En considérant un rendement de 95%, chaque disque peut être remonté à une vitesse de 0,2 m/s en consommant une puissance de l'ordre de 1472,20W.

Sur une hauteur de 80m, un disque stocke un potentiel de 0,16kWh.

Les 50 disques stockent un potentiel de 8,18kWh. Cela correspond environ à la consommation d'une villa moderne (3 MWh/an).

Un disque met 6,67 min pour monter à 0,2 m/s. Remonter l'ensemble des disques prend 5h56 min.

Pour démarrer un disque en montée verticale, en injectant 1200W, la vitesse de 0,2 m/s est atteinte en 0,01 s.

La puissance de 22 kW requise par un chargeur de voiture peut être fournie par environ 15 disques descendants.

La puissance de 75 kW d'un super-chargeur nécessite environ 50 disques descendants.

Un autre exemple d'application de la présente invention a pour objectif la stabilisation d'un réseau.

Lorsque l'objectif est la stabilisation du courant produit, par exemple par des éoliennes, le système comporte deux sous-systèmes : un sous-système reçoit le courant variable, l'autre sous-système émet le courant stabilisé à la valeur moyenne attendue. Cette subdivision peut être réalisée soit par l'emploi d'un double conduit, soit par la séparation verticale ou horizontale d'un même conduit.

De préférence, le système comporte un conduit vertical dans lequel la partie inférieure forme l'un des sous-systèmes et la partie supérieure forme l'autre sous-système. Ce système est de conception simplifiée.

L'une des deux parties se met en mode réception ou stockage Les disques y sont remontés, en les regroupant autant que possible, afin d'absorber toute la puissance.

La seconde partie se met en mode émission. Les disques y sont descendus en les regroupant afin d'émettre une puissance stable. La vitesse de la descente permet la synchronisation à la fréquence du réseau de destination.

Les arrêts des disques peuvent être programmés au centre du conduit ou même à n'importe quelle hauteur.

Lorsque le nombre de disques disponibles pour la réception ou l'émission dans l'une des parties approche de zéro, la fonction de chaque partie inversée. Ainsi les disques évoluent du centre du conduit vers les extrémités, puis inversement. Un disque peut également s'arrêter à une hauteur aléatoire, lors de l'inversion des rôles des demi-conduits. De préférence, dans chaque partie on prévoit une marge dans le nombre de disques disponibles pour absorber de brusques changements dans le courant reçu.

Les durées d'accélération et décélération étant connues, leur fin est anticipée afin de minimiser les interruptions d'absorption ou émission de courant. L'objectif est qu'au sortir de l'infrastructure, ces changements soient imperceptibles.

Dans un autre exemple de réalisation, le système est semi-enterré. Une partie du conduit vertical est sous terre et une partie est aérienne.

Par exemple, environ 42,68 kWh peuvent être stockés dans une tour extérieure de 10m de diamètre intérieur et de 15m de haut accueillant 20 disques de 500 mm de haut. Les disques sont stockés dans une réserve creusée en sous-sol de 10m de haut. Les disques sont par exemple essentiellement composés de gravats agglomérés par du ciment et une enveloppe conductrice, pour un poids par disque de 54,98 t. En se déplaçant à 2mm par seconde, un disque libère de l'ordre 1024,31 W en redescendant.

Dans un autre exemple de réalisation, le système est installé dans un immeuble. A titre d'exemple l'immeuble a une hauteur de 100 m. Celui-ci peut accueillir 100 disques d'un diamètre de 2m et d'une épaisseur de 250mm dans un conduit de ventilation. Cela stockerait l'énergie quotidienne d'environ 23 appartements consommant 1500 kWh/an.

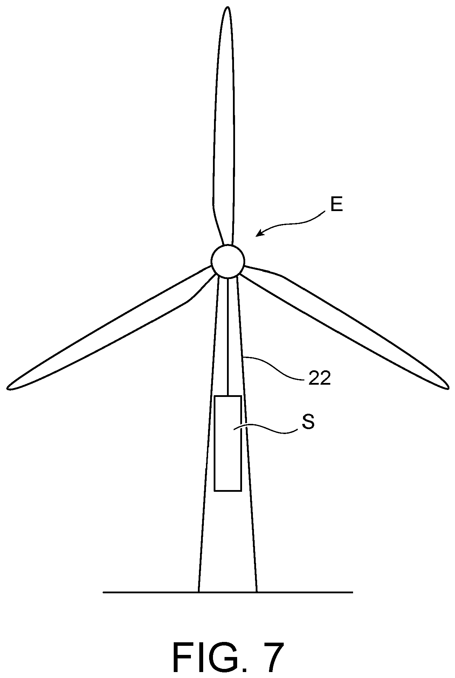

Dans un autre exemple de réalisation représenté schématiquement sur la figure 7, le système de stockage selon l'invention S est installé directement dans un mât 22 d'une éolienne E qui est généralement creux. D'une part, une telle installation permet de placer le stockage d'énergie au plus près de la source, d'autre part un gain de place est réalisé et le système de stockage n'est pas visible. Le système permet également de manière très avantageuse d'absorber le courant alternatif de fréquence et de puissance variable produites par les éoliennes.

Actuellement, les moyens mis en œuvre pour convertir le courant alternatif de fréquence et de puissance variable en courant continu puis alternatif à fréquence stable induisent des pertes importantes sous forme thermique qui nécessitent un refroidissement.

Le système selon l'invention formant un moteur linéaire intégré au mât de l'éolienne, il est possible d'absorber l'énergie de puissance variable produite en ajustant le nombre de disques élevés simultanément. Il est également possible d'absorber les variations de fréquence du courant alternatif émis en ajustant la vitesse de remontée des disques.

En adaptant le nombre de disques, la hauteur du mât et la masse des disques, il est possible de lisser la puissance fournie par l'éolienne sur une durée plus longue.

Le système selon l'invention peut avantageusement être utilisé comme réserve de sécurité de puissance élevée pour des cas d'urgence. Par exemple, les grands barrages hydrauliques nécessitent par exemple des réserves d'énergie pour rester pilotables lors de coupures générales du réseau.

On peut envisager de disposer d'un système de dimensions réduites selon l'invention dans des zones isolées pour alimenter un défibrillateur ou tout autre système nécessité un apport d'énergie ponctuel, sans détérioration dans le temps.

Le système selon l'invention peut par exemple être implanté dans des gares ferroviaires et stocker l'énergie de freinage des trains, et restituer celle-ci pour assister le redémarrage des trains qui nécessite une forte puissance.

Le système selon l'invention peut également être utilisé pour stabiliser un réseau de puissance variable. En effet en gérant l'élévation et la descente de disques, la puissance peut être aisément absorbée ou libérée pour stabiliser la puissance du réseau.

Une élévation de la puissance est absorbée par une élévation d'un ou plusieurs disques, et une baisse de puissance est compensée par l'abaissement d'un ou plusieurs disques. Par exemple, 200 disques de 10m de diamètre et 1m d'épaisseur dans un conduit vertical pourraient lisser des variations de puissance du réseau de 1,186 GW.

Dans un exemple de réalisation, on peut fournir un courant très stable à partir d'un courant variable en évitant les interactions avec les disques utilisés pour la stabilisation de la puissance. Dans cet exemple, on réalise la descente constante de disques à une vitesse définie, proche de la moyenne du courant entrant dans un laps de temps donné. Ceci peut être obtenu en prévoyant un second conduit. Afin d'éviter le transfert des disques d'un conduit à l'autre, chaque conduit peut être alternativement utilisé pour la montée et la descente, lorsque tous les disques sont en partie basse ou en partie haute respectivement. La mise en œuvre de demi-disques tels que représenté sur la figure 6 peut permettre de n'avoir qu'un seul conduit vertical. Dans ce cas, les demi-disques ne pivotent pas de 180°, lorsqu'ils atteignent l'extrémité supérieure ou l'extrémité inférieure du conduit vertical.

De préférence, le passage d'un mode de fonctionnement à l'autre est rapide. Celui-ci peut avoir lieu dès que l'un des conduits approche de la limite de fonctionnement.

Par exemple, un même conduit vertical peut être scindé verticalement en deux conduits verticaux, les deux puits étant côte à côte, ou horizontalement, les deux conduits verticaux étant l'un au-dessus de l'autre.

En variante, les conduits verticaux sont éloignés l'un de l'autre, en effet ils n'interagissent pas l'un avec l'autre.

Le stockage obtenu selon l'invention présente l'avantage de ne pas subir de perte ou de se dégrader au cours du temps, contrairement aux systèmes de stockage par accumulateur électrique ou aux systèmes utilisant des réserves d'hydrocarbure.

Le système selon l'invention peut être une alternative aux banques de supercondensateurs. Il peut restituer massivement et en très peu de temps, l'énergie captée sur une longue période à partir de sources instables.

L'invention permet d'obtenir un rendement de stockage et de restitution d'énergie sensiblement amélioré par rapport aux solutions existantes. En effet la transformation mécanique induit peu de frottement.

En outre, le système connaît de faibles sollicitations mécaniques ce qui le rend robuste et lui permet d'avoir une durée de vie augmentée.

De plus, il ne présente pas de phénomène de décharge.

Le système ne met pas à en œuvre de composants, ni de matériaux rares contrairement aux batteries.

Le système présente également l'avantage d'avoir une mise en route et arrêt rapides. Par exemple, pour une vitesse faible, inférieure à <1m/s, l'énergie cinétique nécessaire à l'accélération est faible et celle-ci est rapide.

## Revendications

1. Système de condensateur à énergie potentielle gravitationnelle comportant un conduit vertical (2), au moins un élément mobile (E1,...En) de stockage de l'énergie potentielle gravitationnelle, et un dispositif électromagnétique porté au moins en partie la face intérieure (8) du conduit vertical et disposé le long de la face intérieure (8) du conduit vertical, ledit dispositif électromagnétique étant destiné à être alimenté par une source de courant électrique, une unité de contrôle (UC) configurée pour gérer le dispositif électromagnétique en fonction du courant électrique à stocker, **caractérisé en ce que** le dispositif électromagnétique étant configuré pour interagir avec une surface latérale dudit au moins un élément mobile de sorte à générer une force magnétique entre la face intérieure du conduit vertical (8) et la face latérale dudit au moins un élément mobile, ladite force magnétique étant apte élever ledit au moins un élément mobile dans le conduit vertical (2) dans une phase de stockage d'électricité, et à freiner ledit au moins un élément mobile en descente dans le conduit vertical en phase de récupération d'au moins une partie de l'électricité stockée.

2. Système selon la revendication 1, dans lequel le au moins un élément mobile (E1, ...En) comporte au moins une enveloppe conductrice électrique et le dispositif électromagnétique comporte des électroaimants (7) sur la face intérieure du conduit vertical, lesdits électroaimants (7) étant répartis sur la hauteur du conduit vertical (2).

3. Système selon la revendication 2, dans lequel le dispositif électromagnétique est destiné à être alimenté par un courant électrique triphasé et dans lequel le dispositif électromagnétique comporte 3n pistes d'électroaimants verticales, n étant un entier strictement positif, lesdites pistes étant réparties angulairement sur la face intérieure (8) du puits, chaque piste étant entourée par une piste alimentée par une phase différente, et dans lequel l'unité de contrôle (UC) est configurée pour gérer l'alimentation de chacune des pistes.

4. Système selon la revendication 3, dans lequel le conduit vertical est de section circulaire, dans lequel ledit élément mobile (E1, ...En) est un disque et dans lequel les électroaimants (7) ont la forme d'arcs de cercle répartis régulièrement angulairement sur la face intérieure du conduit vertical.

5. Système selon la revendication 1 ou 2, dans lequel le dispositif électromagnétique comporte des électroaimants sur la face intérieure du conduit vertical ou sur le au moins un élément mobile et des électroaimants ou des aimants permanents sur ledit au moins un élément mobile.

6. Système selon l'une des revendication 1 à 5, comportant des moyens mécaniques d'immobilisation (11) dudit au moins élément mobile (E1, ...En) le long du conduit vertical (2), lesdits moyens mécaniques d'immobilisation (11) étant avantageusement configurés pour être activés automatiquement en cas d'interruption d'une alimentation électrique.

7. Système selon l'une des revendications 1 à 6, comportant des moyens pour récupérer l'énergie de décélération dudit au moins un élément mobile (E1, ...En) en fin de déplacement.

8. Système selon l'une des revendications 1 à 7, dans lequel le conduit vertical comporte au niveau de l'extrémité supérieure (4) et au niveau de l'extrémité inférieure (6) des zones de stockage dudit au moins un élément mobile.

9. Système selon l'une des revendications 1 à 8, comportant plusieurs éléments mobiles (E1, ...En).

10. Eolienne comportant un mât, des pâles et des moyens de conversion de l'énergie appliquée au pâle en énergie électrique et un système selon l'une des revendications 1 à 9 disposé dans le mât.

11. Installation comportant un système selon l'une des revendications 1 à 9, et des panneaux photovoltaïques et/ou des éoliennes formant la source de courant électrique à stocker.

12. Installation comportant un réseau électrique de puissance présentant des élévations de puissance et des chutes de puissance, et un système selon l'une des revendications 1 à 9, l'unité de contrôle étant configurée pour gérer le dispositif électromagnétique pour stocker du courant et libérer du courant afin de stabiliser le réseau électrique.

13. Installation selon la revendication 12, dans lequel le système de comporte, au moins pendant une phase de fonctionnement, une zone configurée pour absorber les élévations de puissance et une zone configurée pour compenser les chutes de puissance, par exemple chaque zone comportant un conduit vertical et ses éléments mobiles.

## Patentansprüche

1. Kondensatorsystem für potentielle Gravitationsenergie, umfassend einen vertikalen Kanal (2), mindestens ein bewegliches Element (E1,...En) zum Speichern potentieller Gravitationsenergie und eine elektromagnetische Vorrichtung, die zumindest teilweise von der Innenfläche (8) des vertikalen Kanals getragen wird und entlang der Innenfläche (8) des vertikalen Kanals angeordnet ist, wobei die elektromagnetische Vorrichtung dazu bestimmt ist, von einer Quelle elektrischen Stroms gespeist zu werden, eine Steuereinheit (UC), die konfiguriert ist, um die elektromagnetische Vorrichtung abhängig von dem zu speichernden elektrischen Strom zu steuern,
**dadurch gekennzeichnet, dass** die elektromagnetische Vorrichtung konfiguriert ist, um mit einer Seitenfläche des mindestens einen beweglichen Elements zusammenzuwirken, um eine magnetische Kraft zwischen der Innenfläche des vertikalen Kanals (8) und der Seitenfläche des mindestens einen beweglichen Elements zu erzeugen, wobei die Magnetkraft geeignet ist, um das mindestens eine bewegliche Element in einer Elektrizitätspeicherphase in dem vertikalen Kanal (2) anzuheben und das mindestens eine bewegliche Element in einer Rückgewinnungsphase von mindestens einem Teil der gespeicherten Elektrizität beim Absinken in dem vertikalen Kanal abzubremsen.

2. System nach Anspruch 1, wobei das mindestens eine bewegliche Element (E1, ...En) mindestens eine elektrisch leitende Hülle umfasst und die elektromagnetische Vorrichtung Elektromagneten (7) an der Innenfläche des vertikalen Kanals umfasst, wobei die Elektromagneten (7) über die Höhe des vertikalen Kanals (2) verteilt sind.

3. System nach Anspruch 2, wobei die elektromagnetische Vorrichtung dazu bestimmt ist, mit einem dreiphasigen elektrischen Strom gespeist zu werden, und wobei die elektromagnetische Vorrichtung 3n vertikale Elektromagnetspuren umfasst, wobei n eine strikt positive ganze Zahl ist, wobei die Spuren winklig auf der Innenfläche (8) des Schachts verteilt sind, wobei jede Spur von einer Spur umgeben ist, die mit einer anderen Phase gespeist wird, und wobei die Steuereinheit (UC) konfiguriert ist, um die Stromversorgung jeder der Spuren zu verwalten.

4. System nach Anspruch 3, wobei der vertikale Kanal von einem kreisförmigen Querschnitt ist, wobei das bewegliche Element (E1, ...En) eine Scheibe ist und wobei die Elektromagneten (7) die Form von Kreisbögen aufweisen, die winklig gleichförmig an der Innenfläche des vertikalen Kanals verteilt sind.

5. System nach Anspruch 1 oder 2, wobei die elektromagnetische Vorrichtung Elektromagneten an der Innenfläche des vertikalen Kanals oder an dem mindestens einen beweglichen Element und Elektromagneten oder Permanentmagneten an dem mindestens einen beweglichen Element umfasst.

6. System nach einem der Ansprüche 1 bis 5, umfassend mechanische Feststelleinrichtungen (11) des mindestens einen beweglichen Elements (E1, ...En) entlang des vertikalen Kanals (2), wobei die mechanischen Feststelleinrichtungen (11) vorteilhafterweise konfiguriert sind, um bei einer Unterbrechung einer Stromversorgung automatisch aktiviert zu werden.

7. System nach einem der Ansprüche 1 bis 6, umfassend Einrichtungen zum Rückgewinnen der Verzögerungsenergie des mindestens einen beweglichen Elements (E1, ...En) am Ende der Bewegung.

8. System nach einem der Ansprüche 1 bis 7, wobei der vertikale Kanal an dem oberen Ende (4) und an dem unteren Ende (6) Speicherbereiche des mindestens einen beweglichen Elements umfasst.

9. System nach einem der Ansprüche 1 bis 8, umfassend mehrere bewegliche Elemente (E1, ...En).

10. Windkraftanlage, umfassend einen Mast, Rotorblätter und Umwandlungseinrichtungen der auf das Rotorblatt einwirkenden Energie in elektrische Energie und ein System nach einem der Ansprüche 1 bis 9, das in dem Mast angeordnet ist.

11. Anlage, umfassend ein System nach einem der Ansprüche 1 bis 9 und Solarmodule und/oder Windkraftanlagen, die die Quelle des zu speichernden elektrischen Stroms bilden.

12. Anlage, umfassend ein elektrisches Leistungsnetz, das Leistungsanstiege und Leistungsabfälle aufweist, und ein System nach einem der Ansprüche 1 bis 9, wobei die Steuereinheit konfiguriert ist, um die elektromagnetische Vorrichtung zum Speichern des Stroms und Abgeben des Stroms zum Stabilisieren des Stromnetzes zu verwalten.

13. Anlage nach Anspruch 12, wobei das System zumindest während einer Betriebsphase einen Bereich, der konfiguriert ist, um Leistungsanstiege zu absorbieren, und einen Bereich, der konfiguriert ist, um Leistungsabfälle zu kompensieren, umfasst, wobei beispielsweise jeder Bereich einen vertikalen Kanal und seine beweglichen Elemente umfasst.

## Claims

1. A gravitational potential energy capacitor system comprising a vertical duct (2), at least one movable element (E1,...En) for storing gravitational potential energy, and an electromagnetic device carried at least in part by the inner face (8) of the vertical duct and arranged along the inner face (8) of the vertical duct, said electromagnetic device being intended to be supplied by a source of electric current, a control unit (UC) configured to manage the electromagnetic device as a function of the electric current to be stored, **characterized in that**
the electromagnetic device is configured to interact with a lateral surface of said at least one movable element so as to generate a magnetic force between the inner face of the vertical duct (8) and the lateral face of said at least one movable element, said magnetic force being able to raise said at least one movable element in the vertical duct (2) in an electricity storage phase, and to brake said at least one movable element during descent in the vertical duct in a phase of recovering at least part of the stored electricity.

2. The system according to claim 1, wherein the at least one movable element (E1,...En) comprises at least one electrically conductive casing and the electromagnetic device comprises electromagnets (7) on the inner face of the vertical duct, said electromagnets (7) being distributed over the height of the vertical duct (2).

3. The system according to claim 2, wherein the electromagnetic device is intended to be supplied by a three-phase electric current and wherein the electromagnetic device comprises 3n vertical electromagnet tracks, n being a strictly positive integer, said tracks being angularly distributed on the inner face (8) of the shaft, each track being surrounded by a track supplied by a phase different from the phase of the other tracks, and wherein the control unit (UC) is configured to manage the supply of each of the tracks.

4. The system according to claim 3, wherein the vertical duct has a circular cross-section, wherein said movable element (E1,...En) is a disk, and wherein the electromagnets (7) are in the form of circular arcs regularly angularly distributed on the inner face of the vertical duct.

5. The system according to claim 1 or 2, wherein the electromagnetic device comprises electromagnets on the inner face of the vertical duct or on the at least one movable element and electromagnets or permanent magnets on said at least one movable element.

6. The system according to one of claims 1 to 5, comprising mechanical immobilization means (11) for said at least one movable element (E1,...En) along the vertical duct (2), said mechanical immobilization means (11) being advantageously configured to be activated automatically in the event of interruption of an electrical power supply.

7. The system according to one of claims 1 to 6, comprising means for recovering the deceleration energy of said at least one movable element (E1,...En) at the end of travel.

8. The system according to one of claims 1 to 7, wherein the vertical duct comprises, at the upper end (4) and at the lower end (6), storage zones for said at least one movable element.

9. The system according to one of claims 1 to 8, comprising several movable elements (E1,...En).

10. A wind turbine comprising a mast, blades, and means for converting the energy applied to the blades into electrical energy, and a system according to one of claims 1 to 9 arranged in the mast.

11. An installation comprising a system according to one of claims 1 to 9, and photovoltaic panels and/or wind turbines forming the source of electric current to be stored.

12. The installation comprising an electrical grid presenting power increases and power drops, and a system according to one of claims 1 to 9, the control unit being configured to manage the electromagnetic device to store current and release current in order to stabilize the electrical grid.

13. The installation according to claim 12, wherein the system comprises, at least during an operating phase, a zone configured to absorb power increases and a zone configured to compensate for power drops, for example each zone comprising a vertical duct and its movable elements.
